**Europäisches Patentamt**

**European Patent Office**

**Office européen des brevets**

(19)

(11) Numéro de publication: **0 110 770**
**A2**

(12) # DEMANDE DE BREVET EUROPEEN

(21) Numéro de dépôt: **83402241.0**

(51) Int. Cl.³: **G 01 N 21/88**

(22) Date de dépôt: **22.11.83**

(30) Priorité: **25.11.82 FR 8219753**

(71) Demandeur: **ISOVER SAINT-GOBAIN, Les Miroirs 18, avenue d'Alsace, F-92400 Courbevoie (FR)**

(43) Date de publication de la demande: **13.06.84 Bulletin 84/24**

(72) Inventeur: **Maillard, Alain, 44 avenue des Lilas, F-95230 Soisy sous Montmorency (FR)**
Inventeur: **Pichon, Michel, 33 rue de Soisy, F-95600 Eaubonne (FR)**

(84) Etats contractants désignés: **AT BE CH DE GB IT LI LU NL SE**

(74) Mandataire: **Le Vaguerese, Sylvain Jacques et al, SAINT-GOBAIN RECHERCHE 39, quai Lucien Lefranc, F-93304 Aubervilliers Cedex (FR)**

(54) **Procédé et dispositif pour l'analyse d'hétérogénéités dans un matériau transparent.**

(57) L'invention concerne l'analyse de défauts dans des matériaux tels que le verre fondu.

Selon l'invention, le matériau passe dans un faisceau monochromatique dont la longueur d'onde est inférieure à $3 \times 10^{-6}$ m. Le rayonnement diffuse sur les défauts présents dans le matériau. L'analyse des défauts est conduite suivant la position du récepteur détectant les rayons diffusés et la forme du signal reçu.

L'invention permet notamment l'analyse en continu d'une coulée de verre alimentant une machine de formation de fibres.

PROCEDE ET DISPOSITIF POUR L'ANALYSE D'HETEROGENEITES

DANS UN MATERIAU TRANSPARENT

L'invention est relative à un procédé et à un dispositif pour l'analyse d'hétérogénéités présentes dans un matériau transparent.

Plus particulièrement l'invention se rapporte à l'analyse d'un matériau tel que les matériaux verriers lorsque ceux-ci sont à l'état fondu.

La suite de la description est donnée en faisant référence à ces matériaux, qui renferment dans leur masse des défauts conduisant à des phénomènes de diffusion lorsqu'ils sont soumis à un rayonnement approprié.

Le plus généralement, dans les installations de production utilisant un matériau verrier à l'état fondu, l'alimentation est continue qu'il s'agisse par exemple de l'alimentation de dispositifs de formation de fibres ou des opérations conduisant à la formation de feuilles de verre et dans lesquelles le matériau est coulé en nappes, etc...

Il est important de pouvoir suivre l'évolution des défauts d'homogénéité dans le matériau notamment pour déterminer leur influence sur la qualité des produits préparés. En retour la connaissance de l'influence des défauts sur la qualité permet éventuellement en intervenant sur les facteurs qui sont la cause de ces défauts, d'améliorer la qualité des produits obtenus.

Pour cela, il est nécessaire non seulement de détecter la présence des défauts mais encore d'en déterminer la nature, la dimension, de les dénombrer, de suivre leur évolution dans le temps, etc...

L'invention se propose de fournir des moyens convenant à l'étude de ces défauts dans de tels milieux.

L'étude des défauts éventuels d'homogénéité sur des matériaux tels que le verre fondu est difficile pour plusieurs raisons.

Une première difficulté vient du fait que le matériau est analysé le plus souvent au moment même où il est mis en forme. L'analyse doit donc être instantanée. Elle ne doit pas perturber l'alimenta-

- 2 - 0110770

tion en matériau des installations de façonnage.

D'autres difficultés tiennent aux conditions de température et aux conditions d'accès qu'imposent les dispositifs de fabrication sur le poste de fabrication. Les moyens utilisés pour ces mesures doivent rester fiables dans un tel environnement.

Dans le cas de mesures optiques le rayonnement émanant du matériau en fusion constitue une gêne importante.

L'analyse des matériaux verriers est également compliquée par le fait que les défauts sont par leur nature, par leurs dimensions et par leur abondance, très variés.

Les défauts rencontrés dans la masse des matériaux verriers sont regroupés traditionnellement en trois catégories : les bulles, les "gommes" et les solides ou infondus.

Les infondus, comme leur nom l'indique, sont des particules solides entraînées par le matériau en fusion. Ils proviennent principalement des matières premières utilisées ou de fragments de réfractaires arrachés aux parois du four de fusion. Pour l'analyse selon l'invention qui met en oeuvre des moyens optiques comme nous le verrons ci-après, les infondus se caractérisent par une structure superficielle irrégulière et par leur opacité.

Sous le nom de "gommes" on désigne toutes les inclusions qui, bien que transparentes, se distinguent de la masse du verre. Il s'agit notamment de particules de matière première insuffisamment "digérées" par la masse fondue avoisinante. Par leurs caractéristiques, les gommes se situent entre le verre et les infondus. En particulier, bien que transparentes, leur indice de réfraction est différent de celui de la masse de verre avoisinante.

Dans la préparation du verre les bulles sont toujours présentes bien qu'en proportions très variables selon le mode de fusion et d'affinage mis en oeuvre. Dans la préparation des feuilles de verre l'affinage est relativement poussé et les bulles sont très rares. A l'opposé pour la formation de fibres destinées à l'isolation, la présence de bulles est souvent considérée comme moins gênante. Dans ce cas, l'affinage lorsqu'il existe est beaucoup plus sommaire et les bulles sont très abondantes et d'une très grande variété de dimensions.

L'analyse selon l'invention est réalisée en mettant à profit les différences de caractéristiques du matériau verrier d'une part, et des défauts d'autre part, lorsque le matériau est exposé à un faisceau électromagnétique dont la longueur d'onde est plus petite que la dimension moyenne de ces défauts.

L'analyse selon l'invention met également à profit le fait que les divers types d'inclusions ont des effets différents vis-à-vis d'un tel faisceau.

De façon générale, le mode d'analyse selon l'invention comprend la formation d'un faisceau monochromatique, dirigé vers le matériau analysé et la détection et l'analyse du rayonnement diffusé par les défauts du matériau.

Dans son passage dans le milieu transparent le faisceau rencontre les divers types de défauts que nous avons indiqués. Par diffraction, réfraction ou réflexion une fraction du faisceau incident donne lieu à ce que globalement nous désignons par une "diffusion". Nous verrons dans la suite que cette diffusion s'opère suivant des modalités (direction, intensité) qui sont caractéristiques des défauts rencontrés, ce qui permet de les distinguer entre eux.

Pour ce type d'analyse par des moyens optiques, il est nécessaire de tenir compte du fait que les matériaux verriers à l'état fondu ont une forte émission propre qui couvre un large domaine de longueur d'ondes à la façon d'un corps noir.

Le rayonnement émis par le verre constitue un "bruit de fond" très important qui peut masquer les phénomènes de diffusion mis en oeuvre selon l'invention. Pour bien séparer le rayonnement utile, on choisit selon l'invention une source émettrice monochromatique dont la fréquence se situe dans un domaine de faible émissivité pour le verre en fusion. En associant cette source émettrice à un récepteur muni d'un filtre centré sur la même fréquence, il est possible de minimiser la gêne entraînée par les rayonnements étrangers à l'analyse.

Comme nous l'avons vu précédemment la longueur d'onde du faisceau incident doit être choisie en fonction de la transparence du matériau étudié, et du domaine d'émission du matériau, en particulier lorsque celui-ci est porté à température élevée, elle doit aussi être fonction des dimensions des défauts que l'on veut détecter. Pour que les phénomènes de diffusion se manifestent clairement, dans les conditions qui seront précisées dans la suite, il est préférable que la longueur d'onde ne soit pas supérieure au vingtième de la dimension des défauts que l'on veut détecter.

Dans le cas des défauts détectés dans le verre en fusion dans les conditions habituelles de production il est avantageux de choisir une longueur d'onde qui n'est pas supérieure à $3 \times 10^{-6}$ m. De préféren-

0110770

ce la longueur d'onde est comprise entre 0,4 et 2 x 10$^{-6}$ m.

Comme nous le verrons plus loin, compte tenu des caractéristiques des courbes d'émission des matériaux verriers, la longueur d'onde utilisée est avantageusement inférieure à la moitié de la longueur d'onde correspondant au maximum d'émission pour les températures allant de 500 à 2000°C.

Les études faites montrent aussi que les signaux diffusés dépendent de la géométrie du faisceau incident. Expérimentalement on constate en effet que pour avoir des signaux bien définis et caractéristiques des défauts observés, il est préférable d'utiliser un faisceau incident très fin.

Plusieurs facteurs font qu'il est préférable d'avoir un faisceau fin. De façon générale on peut considérer que plus le faisceau est fin meilleur est le pouvoir de résolution du système. Pour la technique considérée ceci se traduit notamment par une meilleure individualisation des défauts observés. Ceci peut s'expliquer par le fait qu'en réduisant l'épaisseur du faisceau on limite les risques de superposition des signaux correspondant à plusieurs défauts qui se présenteraient simultanément. Par ailleurs la forme des signaux enregistrés est d'autant plus caractéristique des défauts que le faisceau est plus fin.

Des considérations d'ordre technologique font qu'en pratique la diminution de l'épaisseur du faisceau est limitée. Pour les analyses effectuées sur les matériaux verriers et notamment pour étudier les bulles qu'ils contiennent, ces limites pratiques ne sont ordinairement pas gênantes. La finesse que l'on peut atteindre suffit pour déceler les bulles qui par leurs dimensions peuvent avoir une influence sur les propriétés du produit final.

Dans le cas de l'analyse d'un filet de verre fondu, le faisceau d'analyse est de préférence plan et coupe le filet selon une section droite. De préférence l'épaisseur du faisceau est au plus égale à la dimension des plus petits défauts à détecter. Pour un filet de verre servant par exemple à l'alimentation d'une machine de fibrage, le faisceau ne présente pas, au niveau du filet de verre, une épaisseur supérieure à 0,2 mm, et de façon avantageuse pas supérieure à 0,1 mm.

Indépendamment des phénomènes de diffusion dus aux défauts, le faisceau incident donne lieu à des phénomènes de réflexion et de réfraction à la surface du filet de verre analysé. Le rayonnement directement transmis à travers le filet ou réfléchi à sa surface est normalement très intense si on le compare à celui diffusé par les défauts.

Pour pouvoir détecter correctement ces derniers il est nécessaire de situer le récepteur en dehors de la trajectoire de ce rayonnement transmis ou réfléchi à la surface du filet.

Dans la suite de la description sont données de façon plus précise en se référant aux figures annexées, les conditions les plus avantageuses pour la mise en oeuvre de l'invention et les résultats qui peuvent être obtenus.

Dans ce qui suit on se limite à l'analyse d'un filet de verre fondu s'écoulant de façon continue et présentant en permanence une section droite circulaire de dimension et position pratiquement constante. Ce type de filet de verre se rencontre communément par exemple dans les dispositifs d'alimentation des machines de fibrage centrifuge. Sur ces machines les dispositions selon l'invention sont particulièrement utiles. Bien que le matériau soit à température très élevée et donne lieu à une intense émission, l'analyse selon l'invention permet de suivre en continu l'évolution des défauts sans modifier le fonctionnement.

Des dispositions analogues sont applicables lorsque le matériau analysé présente une géométrie différente, notamment une forme plane.

Sur les planches de dessins annexées :

- la figure 1 montre une série de courbes d'émission d'un matériau verrier, en fonction de la longueur d'onde et pour différentes températures,

- la figure 2 est un schéma illustrant un mode d'analyse selon l'invention,

- la figure 3 montre de façon typique dans la section droite d'un filet de verre les zones soumises au rayonnement issu de la source monochromatique,

- la figure 4a présente schématiquement le comportement d'une inclusion solide vis-à-vis du rayonnement monochromatique,

- la figure 4b présente schématiquement le comportement d'une bulle dans le rayonnement monochromatique,

- la figure 5 représente des positions préférées pour l'emplacement des détecteurs utilisés pour le mode d'analyse selon l'invention représenté à la figure 2 dans le plan comprenant l'émetteur et perpendiculaire au filet de verre,

- les figures 6a et 6b montrent de façon typique la forme de signaux recueillis selon l'invention,

- la figure 7 représente schématiquement un montage du dispositif récepteur.

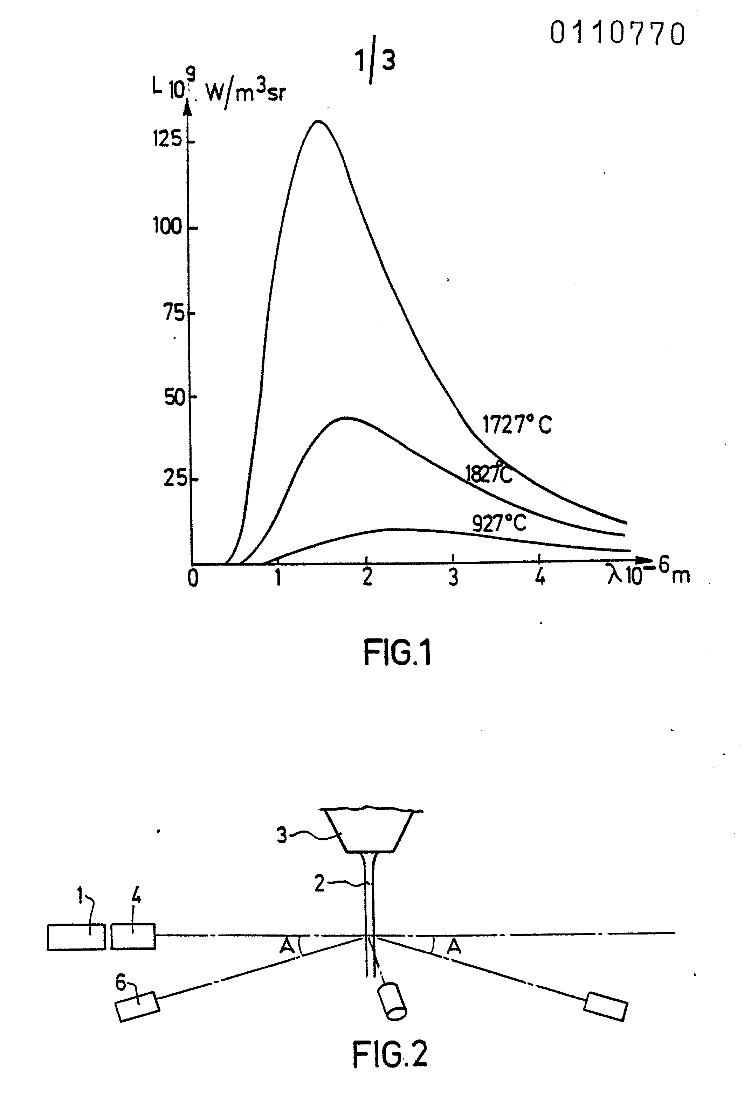

Les courbes de la figure 1 montrent de façon simplifiée l'aspect général de l'émission pour un verre porté à 927, 1327 et 1727°C. Pour ces trois courbes on constate la présence d'un maximum très prononcé avec une décroissance très rapide du côté des faibles longueurs d'onde, et une décroissance relativement lente du côté des longueurs les plus grandes. Ces particularités sont d'autant plus nettes que la température est plus élevée.

On remarque ainsi que l'émission pour les longueurs d'onde inférieures à la moitié de la longueur d'onde du maximum est seulement de quelques centièmes, ou moins, de l'émission dans la zone du maximum. En opérant comme nous l'avons indiqué, avec une source dont la longueur d'onde est inférieure à cette demi longueur d'onde du maximum d'émission, l'émission du matériau reste suffisamment faible pour ne pas gêner l'analyse.

L'ensemble du dispositif pour la mise en oeuvre comprend (figure 2) un générateur 1 d'un faisceau cohérent qui émet en direction d'un filet de matériau 2 s'écoulant à partir de l'orifice d'une filière 3. Le filet 2 présente une section droite sensiblement circulaire.

Un système optique 4 modifie le faisceau de façon qu'au niveau où ce faisceau coupe la trajectoire du filet 2 il se présente sous une forme pratiquement plane. Autrement dit, le faisceau n'irradie qu'une mince fraction du filet de matériau. De préférence le plan du faisceau est choisi sensiblement perpendiculaire à la direction d'écoulement du filet 2.

Un angle différent est également possible si les conditions locales d'encombrement le justifient. Toutefois du point de vue strict de la méthode d'analyse une inclinaison différente n'apporte pas d'avantages. Si néanmoins le faisceau utilisé n'est pas orthogonal au filet, les indications données ci-dessous en ce qui concernent les positions privilégiées pour le récepteur doivent être modifiées en conséquence. Les modifications introduites dans cette hypothèse sont celles qui découlent de façon systématique des lois de l'optique.

Le faisceau cohérent émis, ou faisceau laser, présente habituellement une section circulaire. Sa transformation en un faisceau plan est obtenue par exemple au moyen d'un système optique traditionnel tel qu'une lentille cylindrique.

Lorsque le faisceau initial est de petite dimension par rapport au filet de verre 2 étudié, il passe d'abord dans un agrandisseur de telle sorte que le faisceau plan provenant de la lentille cylindrique s'étende sur toute la largeur du filet.

Un récepteur 6, sensible au rayonnement diffusé à partir du filet de verre 2, est orienté en direction de la zone d'intersection du filet par le faisceau.

Lorsque la fréquence du rayonnement émis par le générateur est convenablement choisie, la puissance de ce rayonnement peut être relativement faible, les signaux reçus par le récepteur ont une amplitude suffisante pour se distinguer sans peine du "bruit de fond" constitué par le rayonnement du filet.

Pour permettre une analyse satisfaisante les différents éléments utilisés répondent à une série de conditions bien déterminées. Ces conditions concernent notamment des dispositions relatives de l'émetteur, du récepteur et du filet analysé.

Le mode de propagation du faisceau dans le filet de matériau permet de bien comprendre comment disposer au mieux les éléments du dispositif.

Sur sa trajectoire le faisceau qui rencontre le filet de verre subit réflexion et/ou réfraction suivant le point d'incidence à la périphérie du filet.

Compte tenu de ce que le faisceau est dirigé suivant une section droite du filet de verre, le rayonnement transmis ou réfléchi se situe dans le même plan orthogonal au filet de verre. Pour éviter de saturer le récepteur par ces rayonnements qui pourraient masquer la diffusion provenant des défauts analysés, il convient donc de placer le récepteur en dehors du plan en question.

Un faible rayonnement provient également de réflexions multiples sur les faces internes du filet analysé. Ces réflexions multiples s'atténuent cependant très rapidement. Un angle faible par rapport au plan d'incidence suffit ordinairement pour ne pas percevoir ce rayonnement parasite. Par ailleurs l'angle de visée du récepteur par rapport au plan du faisceau incident A reste de préférence relativement faible. Avantageusement cet angle n'est pas inférieur à 5° et pas supérieur à 20°. Un angle plus petit pourrait conduire à la réception de rayonnement provenant de réflexions multiples dans le filet. Si à l'inverse l'angle est trop important la réduction supplémentaire de l'intensité du rayonnement provenant du filet est très faible alors que celle du rayonnement provenant des défauts est très sensible. Il est donc préférable de rester dans les limites indiquées précédemment qui correspondent aux valeurs les plus élevées du rapport signal utile constitué par le rayonnement provenant des défauts à ce que l'on peut désigner comme un bruit de fond et qui englobe le rayonnement résiduel réfléchi ou réfracté à la surface du filet de verre en direction du récepteur.

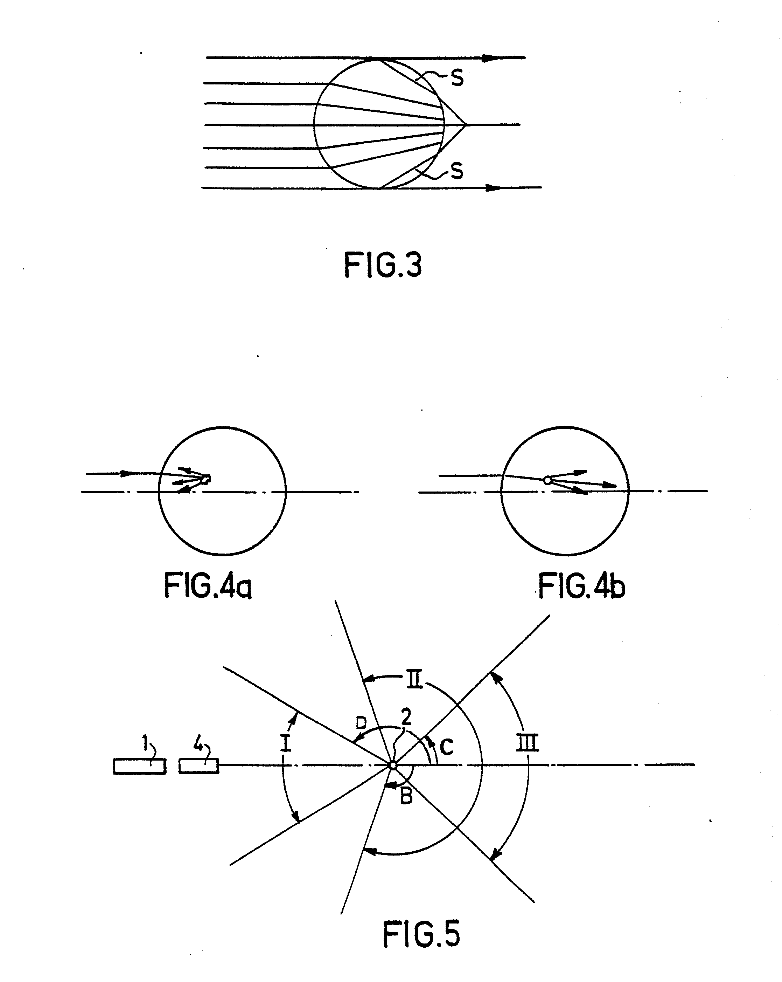

A la figure 3 est représenté en coupe le cheminement du rayonnement dans le filet. Par le jeu de réfraction à l'intérieur du filet on constate que deux zones $\underline{S}$ de la section du filet ne sont pas traversées par le rayonnement.

Il va de soi que seuls les défauts qui dans la section du filet sont situés sur la trajectoire du rayonnement peuvent donner lieu à un signal détectable. Les résultats quantitatifs de l'analyse doivent tenir compte du fait qu'une fraction constante du filet échappe à l'observation.

Néanmoins il est préférable de limiter l'extrapolation des résultats au-delà de ce qui est effectivement analysé et donc il est souhaitable que la fraction de section du filet effectivement balayée par le faisceau soit aussi large que possible. Ceci implique, cela va de soi, que le faisceau incident soit au moins aussi large que le filet de verre.

La figure 4a montre très schématiquement le phénomène que l'on observe lorsque le faisceau atteint une particule solide. La diffusion se fait alors essentiellement par réflexion. Compte tenu des irrégularités de surface de ces particules, la diffusion s'effectue dans de multiples directions, ce qui est représenté dans le plan par différentes flèches. Bien évidemment la diffusion ne se limite pas au plan de la figure. Par ailleurs, sans entrer dans une étude théorique, on comprend qu'un maximum de réflexion se développe en direction opposée à la lumière incidente. Autrement dit la position la plus favorable pour détecter les signaux correspondants à la présence de particules solides se situe au voisinage de l'émetteur.

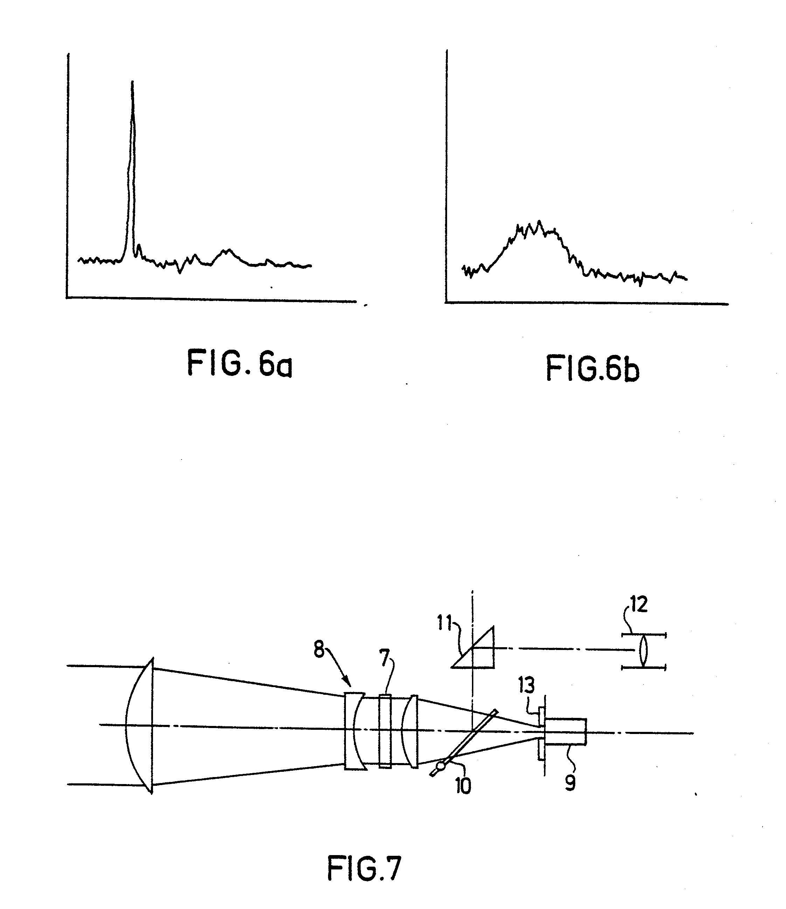

Nous avons indiqué précédemment comment le récepteur devait se situer par rapport au plan du faisceau incident. Il faut donc ajouter à ces conditions, que les plans définis par l'axe du filet et, d'une part l'axe optique de l'émetteur et d'autre part l'axe optique du récepteur font entre eux avantageusement un angle $\underline{D}$ (figure 5) qui n'est pas inférieur à 150° de part et d'autre de l'axe de l'émetteur.

C'est ce qui est représenté à la figure 5 qui précise, en projection dans le plan du faisceau perpendiculaire au filet, les zones dans lesquelles la détection de chaque type de défaut est la plus favo-

- 9 -      0110770

rable. Pour les particules solides, il s'agit de la zone I.

Les considérations faites à propos des défauts constitués par les particules solides, peuvent être faites pour ce qui concerne les bulles ou les gommes.

La figure 4b représente la trajectoire des rayons rencontrant une bulle. Le faisceau traverse la bulle mais son orientation est sensiblement modifiée. Si une partie du rayonnement se retrouve dans une direction globale peu différente de la direction initiale, le comportement du système optique que constitue, d'une part la bulle elle-même, et d'autre part le filet de verre, fait que le rayonnement diffusé se trouve très dispersé. Il recouvre une part importante de l'espace à l'exception des zones situées près de l'émetteur.

A la figure 5 et dans le plan du faisceau incident, la zone efficace pour la lumière diffusée par les bulles, est indiquée en II. Par rapport au plan de symétrie du sytème défini par le filet de verre et l'émetteur, la zone limite de diffusion utilisable pour analyser les bulles est définie par des plans formant avec le plan de symétrie un angle $\underline{B}$ au plus égal à 110° environ et de préférence au plus égal à 100°.

La comparaison des positions préférées du récepteur pour l'observation des particules solides d'une part et des bulles d'autre part montre que ces positions sont entièrement distinctes. L'observation séparée de ces deux types de défauts ne pose donc pas de difficultés.

Le comportement des gommes est voisin de celui des bulles. En particulier, nous l'avons indiqué, les gommes sont transparentes. Leur influence sur le rayonnement est cependant moins nettement marquée d'une part sans doute parce qu'elles ont un indice de réfraction voisin de celui du verre, et d'autre part parce qu'elles n'ont pas une forme bien définie. Le passage de la masse de verre à la gomme se fait par une modification progressive du milieu et de ses propriétés, notamment de ses propriétés optiques. On constate, toujours sans entrer dans une étude théorique, que dans ces conditions la diffusion du rayonnement utilement détectable se limite à un espace proche du trajet suivi par le rayonnement dont la progression n'est pas affectée par des défauts du filet de verre.

De façon expérimentale, en se référant au plan de symétrie de l'ensemble, la zone dans laquelle une diffusion utile dûe aux gommes peut être observée est limitée par les plans faisant avec le plan de symétrie un angle C au plus de50° et de préférence au plus égal à 40°. A la figure 5, ceci correspond à la zone III.

En comparant ce que nous venons d'indiquer des zones dans lesquelles les bulles et les gommes sont observables, on remarque que ces zones ne se recoupent que partiellement. Il est donc possible en pratique de détecter les bulles seules dans la zone correspondant à un angle de 50 à 110°. Au contraire, dans la zone d'angle inférieur à 50° on détecte simultanément les rayons diffusés par les bulles et par les gommes.

Nous venons d'indiquer de façon générale comment situer le récepteur pour détecter les signaux liés à la présence de défauts. Il est aussi intéressant de voir quelle structure ont ces signaux.

L'étude théorique des phénomènes de propagation, comme nous l'avons dit, est relativement complexe et n'apporte pas d'éléments plus précis que les résultats expérimentaux dans ce domaine. Ceux-ci font apparaître deux structures très distinctes suivant que l'on considère les bulles ou les particules solides.

L'aspect général de l'intensité du signal reçu en fonction du temps montre, lorsque l'on opère dans les condition d'émission et de réception précisées précédemment, pour les bulles un pic très marqué et très étroit (figure 6a) et pour les particules solides (figure 6b) au contraire, une forme beaucoup plus épanouie avec un maximum moins prononcé.

Sans entrer dans les considérations théoriques, une appréciation intuitive du phénomène permet de comprendre cette différence. Le rayonnement provenant des particules solides est beaucoup plus irrégulier pour la raison qu'il prend naissance sur une surface elle-même irrégulière alors que les bulles présentent une géométrie beaucoup plus franche avec, par rapport au milieu avoisinant, une variation brusque d'indice de réfraction.

Ces interprétations pour incomplètes qu'elles soient, permettent de rendre compte des observations effectives.

Les gommes conduisent à un signal du type de celui des particules solides. Pour cette raison, même si la présence des signaux correspondant aux gommes est indissociable de celle des signaux des bulles, l'identification des uns et des autres reste cependant possible. Pour ce qui concerne la distinction entre insolubles et gommes, elle résulte de la position du récepteur. Comme nous l'avons vu ci-dessus les domaines d'observation des solides et des gommes sont entiè-

rement distincts.

Les signaux obtenus peuvent aussi servir à l'étude des dimensions des défauts détectés.

La mesure d'un signal unique ne permet pas de connaître la dimension de la particule d'où il émane. Il va de soi que de façon générale le signal est d'autant plus important que la dimension du défaut est plus grande. Cependant il faut tenir compte dans cette appréciation de la position du défaut dans le filet. Cette position détermine aussi bien l'intensité du rayonnement incident reçu sur le défaut que l'intensité diffusée dans la direction choisie pour la réception. En plus le verre aux températures considérées est très absorbant pour une vaste gamme de fréquences. Suivant la position du défaut et par conséquent suivant la distance parcourue dans le filet du matériau, l'absorption est plus ou moins importante. L'influence de la position du défaut dans le filet de verre sur l'intensité du signal est donc considérable.

Sur un grand nombre de défauts néanmoins, la distribution des dimensions restant la même, la mesure de l'intensité globale des signaux permet une mesure statistique de la dimension des défauts détectés.

De toutes façons les défauts détectés ne constituent qu'une fraction des défauts effectivement présents. Nous avons vu que certaines zones du filet ne sont pas observées car non traversées par le rayonnement. A cela s'ajoute, compte tenu de la faible dimension de la surface du récepteur par rapport à l'ensemble de l'espace dans lequel le rayonnement issu des défauts peut être dirigé, qu'une partie seulement de ce rayonnement est capté. Dans ces conditions les mesures ne peuvent conduire qu'à une valeur statistique.

Ainsi, dans les conditions de mise en oeuvre correspondant à l'exemple décrit ci-après, des mesures comparatives faites en prélevant des échantillons qui sont étudiés hors de l'installation, ont montré que la proportion de défauts détectés par la méthode selon l'invention est de l'ordre de 10 à 20 %. Néanmoins le pourcentage dans des conditions déterminées est assez rigoureux. Avec une erreur maximum constatée de l'ordre de 1 %, erreur tout à fait admissible dans les conditions opératoires et pour les résultats recherchés, on peut considérer la méthode comme fiable compte tenu du fait qu'il ne s'agit pas de contrôler un matériau pour s'assurer de l'absence de tout défaut mais bien d'une mesure statistique pour des défauts qui apparaissent

- 12 -     0110770

avec une fréquence relativement importante.

A titre d'exemple une étude a été conduite pour analyser le filet de verre s'écoulant dans une machine de fibrage par centrifugation du type décrit notamment dans le brevet FR-A-2 443 436.

Le dispositif d'analyse comprend les différents éléments qui sont représentés sur la figure 2, à savoir un émetteur 1, un récepteur 6 auquel sont associés des moyens pour le traitement des signaux reçus.

Dans le cas étudié, la source lumineuse est constituée par un laser qui produit un rayonnement bien monochromatique avec une forte luminance même pour de faibles puissances. Le laser utilisé, choisi pour son faible coût, est de type He-Ne ( = $632,8.10^{-9}$m) d'une puissance de 5 mW.

Le laser produit un faisceau cylindrique de 1 mm de diamètre. Ce faisceau est traité optiquement, au moyen d'un agrandisseur et d'une lentille cylindrique, pour lui conférer une forme plane de très faible épaisseur (moins de 0,08 mm). Ce faisceau est focalisé sur le filet de verre qu'il coupe suivant une section droite sur toute sa largeur qui est de l'ordre du centimètre.

L'ensemble de l'émetteur et de l'optique associée est situé dans un boitier refroidi pour le protéger contre la chaleur qui se dégage de la machine de fibrage. L'axe optique du système est disposé horizontalement et de façon à recouper le filet de verre. La distance entre l'émetteur et le filet, déterminée par la focale de la lentille cylindrique, est de un mètre.

Compte tenu des conditions notamment de température et d'encombrement au voisinage immédiat du filet de verre, il est important selon l'invention de pouvoir placer le dispositif émetteur, comme le récepteur, à une certaine distance même si dans le cas du récepteur ceci s'accompagne d'une diminution de la puissance des signaux reçus.

Le récepteur (figure 7) comprend un filtre 7 de type interférentiel de faible bande passante ( = $3.10^{-9}$ m) centrée sur la longueur d'onde de l'émetteur. Ce filtre permet d'éliminer la majeure partie du rayonnement parasite émis par le filet incandescent.

L'optique 8 associée à ce filtre interférentiel forme l'image de la partie du filet touchée par le faisceau sur une photodiode diaphragmée 9. La photodiode utilisée de type PIN travaille en photovoltaïque, un préamplificateur à faible bruit est associé à la photodiode.

L'ensemble du filtre de la cellule et du préamplificateur est

- 13 -

0110770

disposé dans un boitier refroidi situé à 0,75 m du filet de verre. Il est en dehors du plan de propagation directe du faisceau lumineux.

L'inclinaison A de l'axe de visée du récepteur par rapport au plan du faisceau incident est de 10°.

Suivant le type de défaut observé, le plan contenant le récepteur et le filet fait avec celui contenant l'émetteur un angle de 180°, 100° ou 0°. Pour chacune de ces positions les signaux reçus correspondent respectivement aux particules solides, aux bulles seules et aux bulles et aux gommes.

En pratique il apparait préférable de placer le récepteur dans le plan de symétrie de l'ensemble optique. Les positions 180° et 0° correspondent en effet à un maxium d'intensité pour les rayons respectivement réfléchis et réfractés. Par ailleurs ces positions sont celles pour lesquelles la probabilité de présence des rayons diffusés est la plus grande pour des défauts qui se trouvent nécessairement distribués au hasard dans toute la section du filet de verre.

Le système optique du récepteur utilisé est représenté schématiquement à la figure 6. Il comprend en plus des éléments énumérés précédemment un ensemble de visée formé par un miroir pivotant 10, un prisme de renvoi 11 et un oculaire 12. A l'aide de cet ensemble de visée, l'image de la partie du filet éclairée par le laser, et formée au travers de l'optique du récepteur, est placée en coïncidence avec la fente du diaphragme 13 situé devant la cellule.

Le signal électrique émis par le préamplificateur passe ensuite dans un ensemble de traitement du signal non représenté.

De façon typique, le signal est débarrassé des bruits haute fréquence provenant essentiellement des circuits et des parasites extérieurs, par un filtre passe bas de fréquence 10 Khz. Le signal filtré est amplifié et dirigé sur des filtres permettant de ne prendre en compte que les signaux significatifs. Des compteurs d'impulsions à seuils réglables permettent le dénombrement des défauts et éventuellement leur classement par dimension pour former un histogramme de ces défauts. Il est aussi possible par ce traitement de distinguer les bulles des gommes pour le récepteur placé à 180° de l'émetteur.

Dans le cas étudié, le dispositif ne comporte qu'un seul récepteur placé successivement dans les trois positions indiquées précédemment. Il va de soi qu'un dispositif analogue peut être constitué présentant deux ou trois récepteurs fonctionnant simultanément et placés chacun dans l'une de ces positions.

Au moyen du dispositif décrit précédemment, l'étude systématique du filet de verre, a permis dans le cas considéré, d'identifier et de dénombrer des bulles. Les mesures ont été conduites après étalonnage des réponses.

L'analyse a montré ainsi la présence dans le verre étudié d'une grande quantité de bulles (de l'ordre de 1000/kg de verre) dont les dimensions sont supérieures à 0,01 mm et pour les plus importantes sont de l'ordre du millimètre.

Les gommes et infondus sont en nombre beaucoup plus limité, environ 10 par kg et apparaissent de façon irrégulière essentiellement lors d'un changement de régime dans la préparation du matériau.

En prélevant des échantillons en cours de fonctionnement, et en analysant ceux-ci une fois refroidis, on a pu constater une bonne concordance avec les mesures faites selon l'invention. La proportion de défauts détectés reste constante pour diverses fréquences d'apparition. La variation dans le rapport des mesures n'excède pas 1 %.

Dans le système représenté à la figure 2, l'étalonnage est lié non seulement à une disposition géométrique précise mais aussi au diamètre du filet de verre pour des raison d'optique, mais surtout du fait de l'absorption importante du verre aux températures considérées. En associant un dispositif de mesure du diamètre du filet (par exemple un système de photodiodes alignées), il est possible de pondérer automatiquement les signaux reçus pour que l'étalonnage soit indépendant du diamètre du filet.

L'exemple précédent se rapporte à un filet cylindrique, mais les mêmes moyens peuvent être utilisés pour l'analyse d'une nappe plane.

REVENDICATIONS

1. Procédé pour l'analyse de défauts présents dans un verre en fusion, dans lequel :

- un faisceau monochromatique dont la longueur d'onde est inférieure à 3 x 10$^{-6}$ m est dirigé vers le matériau, de telle façon qu'il pénètre au moins partiellement dans le matériau, et diffuse sur les défauts qu'il rencontre suivant des directions et des intensités dépendant des défauts,

- le rayonnement diffusé est détecté par un récepteur disposé de façon que le rayonnement diffusé ne soit pas masqué par celui provenant de la réflexion ou de la réfraction sur le matériau analysé, et le rayonnement étant reçu sur le récepteur après un filtrage ne laissant passer que la longueur d'onde du faisceau monochromatique,

- le matériau est animé d'un mouvement relatif vis-à-vis du faisceau d'analyse de sorte que l'intensité de la lumière diffusée varie en fonction des défauts passant dans le faisceau monochromatique, le récepteur transformant le rayonnement reçu en un signal électrique qui est amplifié et enregistré, la nature du défaut étant déduite de la forme du signal.

2. Procédé selon la revendication 1, dans lequel les défauts sont analysés selon leur nature en choisissant la position du récepteur par rapport au faisceau monochromatique incident et au matériau analysé.

3. Procédé selon la revendication 2, pour l'analyse d'un filet de verre de section droite sensiblement circulaire s'écoulant en continu dans lequel le faisceau monochromatique d'analyse est plan et dirigé selon une section droite sur le filet, le récepteur étant disposé de façon à recevoir le rayonnement diffusé qui fait avec le plan du faisceau un angle d'au moins 5° et de 20° au plus.

4. Procédé selon la revendication 3 pour l'analyse des défauts constitués par des particules opaques, caractérisé en ce que le récepteur est placé dans un plan faisant avec le plan défini par le filet de verre et la direction du faisceau incident un angle $\underline{D}$ supérieur à 150°.

5. Procédé selon la revendication 3 pour l'analyse des défauts constitués par des bulles, caractérisé en ce que le récepteur est placé dans un plan faisant avec le plan défini par le filet de verre et la direction du faisceau incident un angle $\underline{B}$ qui est au plus égal à 110°.

6. Procédé selon la revendication 3 pour l'analyse des défauts constitués par des gommes, caractérisé en ce que le récepteur est placé dans un plan faisant avec le plan défini par le filet de verre et la direction du faisceau incident un angle $\underline{C}$ au plus égal à 50°.

7. Procédé selon l'une quelconque des revendications 1 à 6, caractérisé en ce que pour une même position du récepteur la nature des défauts est précisée par la forme des signaux reçus, les différentes formes étant séparées par des moyens de filtrage électroniques associés aux moyens d'amplification et d'enregistrement.

8. Procédé selon l'une quelconque des revendications précédentes caractérisé en ce que le faisceau monochromatique a une longueur d'onde comprise entre 0,4 et 2 x 10$^{-6}$ m.

9. Dispositif pour la mise en oeuvre du procédé selon l'une quelconque des revendications précédentes, caractérisé en ce qu'il comprend :

- un émetteur (1) d'un faisceau monochromatique de longueur d'onde inférieure à 3 x 10$^{-6}$ m dirigé vers le matériau analysé (2),

- des moyens optiques (4) formant le faisceau en une nappe plane de faible épaisseur sur le matériau analysé,

- un ensemble récepteur (6) comprenant des filtres centrés sur la longueur d'onde de l'émetteur, des moyens convertissant le rayonnement reçu en un signal électrique,

- des moyens de filtrage électroniques pour séparer les signaux suivant leur nature et des moyens de comptage.

10. Disposifif selon la revendication 9 pour l'analyse d'un filet de matériau à l'état liquide, caractérisé en ce qu'il comporte des moyens de mesure du diamètre du filet permettant ainsi dans l'analyse d'associer à chaque mesure concernant les défauts, le diamètre du filet et de corriger, éventuellement de façon automatique, lesdites mesures pour tenir compte des variations possibles du diamètre.

FIG.1

FIG.2

FIG.3

FIG.4a

FIG.4b

FIG.5

FIG.6a

FIG.6b

FIG.7